Europäisches Patentamt

European Patent Office

Office européen des brevets

(11) Publication number: **0 512 924 A2**

# EUROPEAN PATENT APPLICATION

(21) Application number: **92401275.0**

(22) Date of filing: **07.05.92**

(51) Int. Cl.⁵: **B41J 2/445**

(30) Priority: **07.05.91 KR 735791**

(43) Date of publication of application:
**11.11.92 Bulletin 92/46**

(84) Designated Contracting States:
**DE FR GB NL**

(71) Applicant: **GOLDSTAR CO. LTD.**
**20, Yoido-Dong Yongdungpo-Ku**
**Seoul(KR)**

(72) Inventor: **Lee, Kwang Jae Moonjung-Dong,**
**Jookong**
**A.P.T. 20-207, Songpa-Ku**
**Seoul(KR)**

(74) Representative: **Fort, Jacques**
**CABINET PLASSERAUD 84, rue d'Amsterdam**
**F-75009 Paris(FR)**

(54) **Optical exposure system for color video printer.**

(57) An exposure system of a color video printer compring an exposure controller for executing an exposure control by generating signal voltages corresponding to red, green and blue images, an exposing unit for image-forming red, green and blue image signals upon the control of the exposure controller and exposing a photosensitive material, and a light emitting unit for irradiating red, green and blue lights to the exposing unit in the order of the red, green and blue signal voltages. The system is capable of obtaining full color images of good quality by supplying red, green and blue color lights to a monochrome liquid crystal display panel and of easily obtaining a transfer control of a photosensitive material.

EP 0 512 924 A2

## BACKGROUND OF THE INVENTION

### 1. Field of the Invention

The present invention relates to an exposure system(or an image-forming system) for a color video printer and more porticularly, to an exposure system for a color video printer which is capable of obtaining a high quality full color picture by exposing consecutively red, green and blue lights to a monochrome liquid crystal display panel (hereinafter, referred to as a monochrome LCD panel).

### 2. Description of the Prior Art

In general, various methods for printing an image according to electrical image signals are well known in the art. One of typical methods for such a printing is that electrical image signals are image-formed in an optical image and a photosensitive medium is exposed by use of the light of the optical image so that the image is recorded on and printed from the photosensitive medium.

In such a method, a cathode ray tube is widely used as an exposing apparatus for image-forming electrical image signals to an optical image and exposing the image to a photosensitive medium. In such a case, in order to make the optical image on the cathode ray tube correctly focus on a photosensitive medium, an optical lens system is utilized or lights of optical images are transmitted from a pixel of the cathode ray tube to another pixel of the photosensitive medium by contacting the two ends of fiber-optics with the cathode ray tube and the photosensitive medium.

In a conventional color video printer using a fiber otpics cathode ray tube(FOCRT) as an exposing unit, optical images formed on a screen of the FOCRT are recorded on a photosensitive medium by use of a FOCRT provided at its front edge with a fiber optics faceplate.

Such a color video printer, however, has a disadvantage in that since an optical lens system or a FOCRT is required to form correctly the optical image of the CRT to the photosensitive medium, the exposing unit becomes larger in size and complicated in structure. Especially, a high voltage generator for driving the CRT, a magnetic shield, a yoke coil and the like are additionally required, thereby the above-mentioned problems become more serious.

In order to obviate the above-mentioned problems, an exposure system has been proposed by the inventor of the present application in Korea Patent application No. 90-19491 (filed Nov. 29, 1990), in which a fiber optics liquid crystal display-(FOLCD) package is used as an exposing unit-(image-forming unit) to reduce the volume of the system and the manufacturing cost.

However, such a system also has a problem that it takes a long time in the exposing operation.

For example, when exposing a photosensitive medium of a regular photograph size(3 inch x 4 inch), it takes about 2,500 seconds to about 7,500 seconds, assuming that it has 500 lines in total because in general about 5 to about 15 seconds are required to expose one line of a liquid crystal display panel which is currently used.

Another exposure system has been proposed by the inventor of the present application in Korean Patent application No. 19490 (filed Nov. 29, 1990), in which plural lines are constituted by red, green and blue lines in order to reduce the whole exposing time. In this type of system, although a light source of high intensity is used the time required in printing may not be reduced more than ten times.

Accordingly, there has been a problem in the color video printer using FOLCD that it takes too long time in printing, compared to other type of color video printer using a thermal printing method or a silver salt method which requires about 60 seconds in printing a photosensitive medium of regular photograph size(3 inch x 4 inch).

## SUMMARY OF THE INVENTION

Accordingly, it is an object of the present invention to provide an exposure system for a color video printer which overcomes the problems encountered in the prior art system by reducing the time required in the printing and enhancing the resolution of the printed image.

Another object of the present invention is to provide an exposure system for a color video printer which is simple in construction.

Other objects and further scope of applicability of the present invention will become apparent from the detailed description given hereinafter. It should be understood, however, that the detailed description and specific examples, while indicating preferred embodiments of the invention, are given by way of illustration only, since various changes and modifications within the spirit and scope of the invention will become apparent to those skilled in the art from this detailed description.

Briefly described, the present invention relates to an exposure system for a color video printer which comprises an exposing unit for exposing a photosensitive medium by receiving signal voltages corresponding to red, green and blue image signals and image-forming the signal voltages into an optical image, a light emitting unit for irradiating red, green and blue lights to the exposing unit in the order of applying the red, green and blue signal voltages, and an exposure control unit for controlling the driving of the exposing unit, by converting red, green and blue image signals into signal voltages suitable for controlling a liquid crystal, in response to the signal voltages.

The exposing unit includes a monochrome LCD panel which has an effective display surface commensurate with a picture to be printed, and a spacer member which is attached on a surface of the monochrome LCD panel for maintaining a uniform clearance between the monochrome LCD panel and a photosensitive medium so as to trasmit a light to the photosensitive medium at a uniform density.

The light emitting unit includes a back light section for irradiating a light at a rear side of the monochrom LCD panel, a color filtering member disposed between the monochrom LCD panel and the back light section in a movable manner for allowing the light from the back light section to be converted into red, green and blue lights and then irradiated to the LCD panel, and a driving member for reciprocatingly moving the color filtering member in the direction of the conveying of the photosensitive medium.

The light emitting unit may include a lamp supporter which is disposed at the rear side of the monochrome LCD panel in a reciprocatingly movable manner in the conveying direction of the photosensitive medium, red, green and blue light sources contained in respective lamp cavities of the lamp supporter and selectively flickered, and a driving member for driving the lamp supporter.

As for the spacer member, a transparent thin glass plate or a thin plastic layer may be used.

The color filtering member includes a color filter supporter whiich is reciprocatingly movable in the conveying direction of photosensitive medium, and red, green and blue color filters contained within the color filter supporter.

The color filter driving member or the lamp supporter driving member include the linear motor having a shaft connected to the color filter supporter or the lamp supporter and guide rolls for guiding horizontally the color filter supporter or the lamp supporter.

As for the red, green and blue filters, a celluloid, a glass plate or a plastic plate with a corresponding color may be used.

It is preferable that the red, green and blue color filters have upper, lower, left and right margins so that the whole size thereof may be larger than the picture.

## BRIEF DESCRIPTION OF THE DRAWINGS

The present invention will become more fully understood from the detailed description given hereinbelow and the accompanying drawings which are given by way of illustration only, and thus are not limitative of the present invention, and wherein:

Figs. 1A to Fig. 1C are longitudinal sectional views showing the configuration and operation of an exposing unit according to the present invention, in which :

Fig. 1A is a sectional view showing a state that a red picture image is printed on a photosensitive medium;

Fig. 1B is a sectional view showing a state that a green picture image is printed on a photosensitive medium; and

Fig. 1C is a sectional view showing a state that a blue picture image is printed on a photosensitive medium;

Figs. 2A to 2C are explanatory views showing the relationship between red, green and blue color filters and the photosensitive medium when exposing red, green and blue color images;

Fig. 3 is a longitudinal sectional view showing the exposing unit according to another embodiment of the present invention;

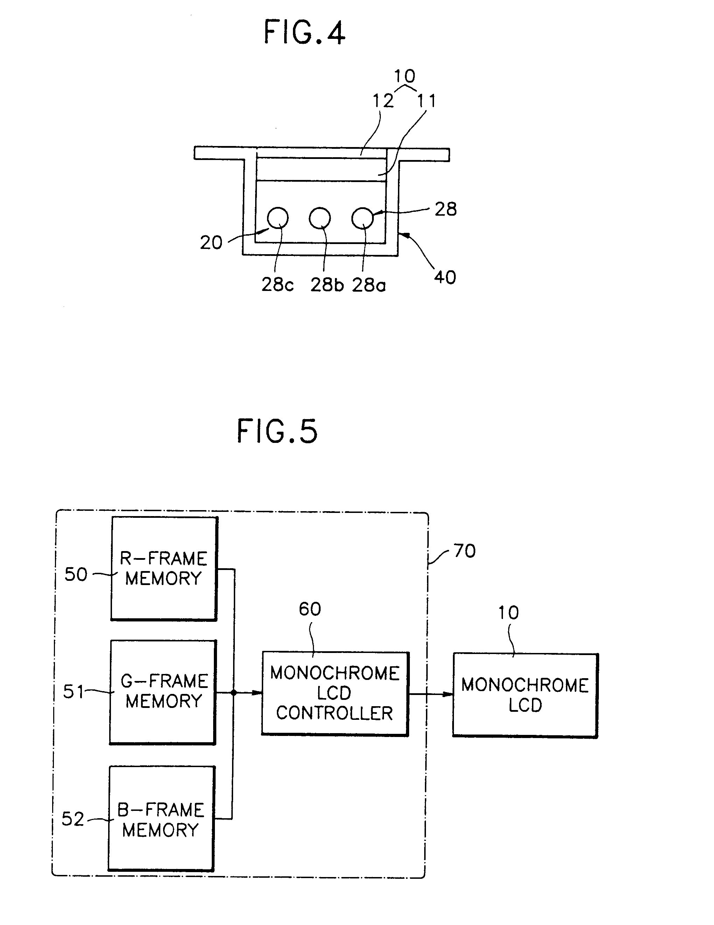

Fig. 4 is a longitudinal sectional view showing the exposing unit according to still another embodiment of the present invention; and

Fig. 5 is a block diagram of the exposing control unit of the present invention.

## DESCRIPTION OF THE PREFERRED EMBODIMENTS

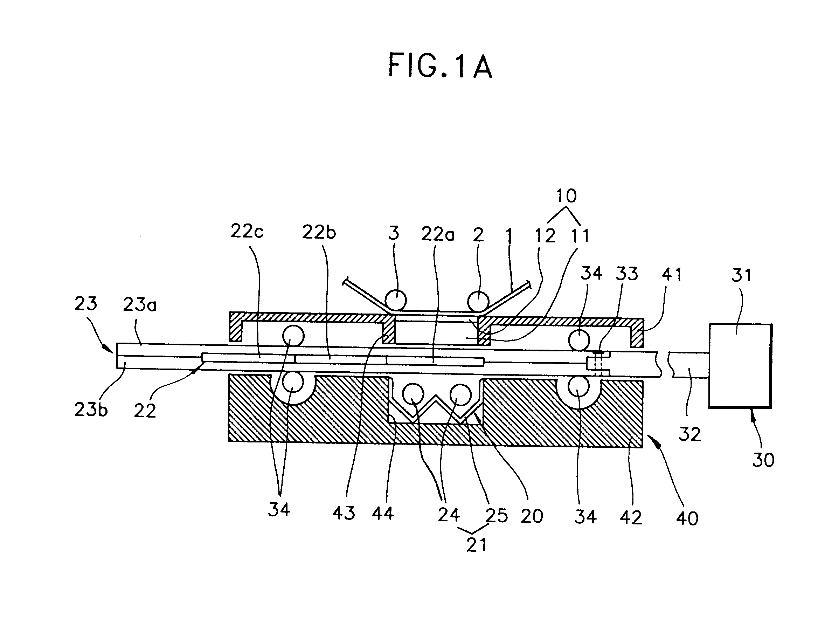

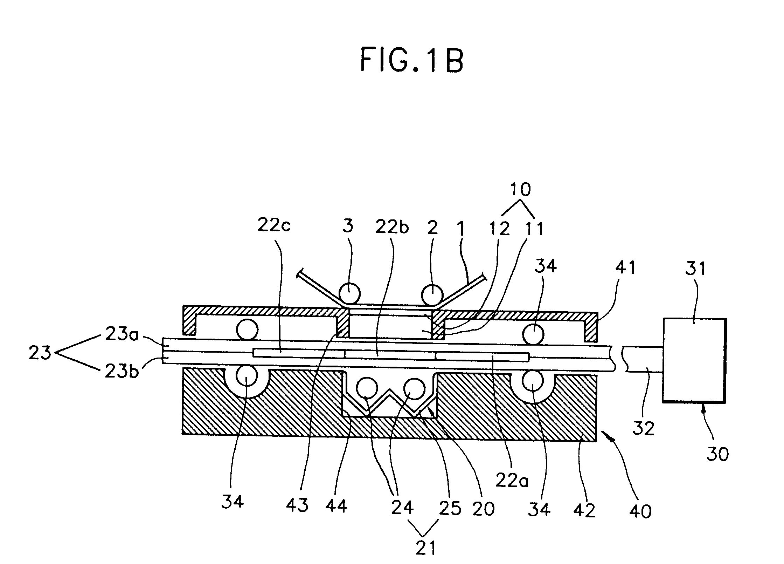

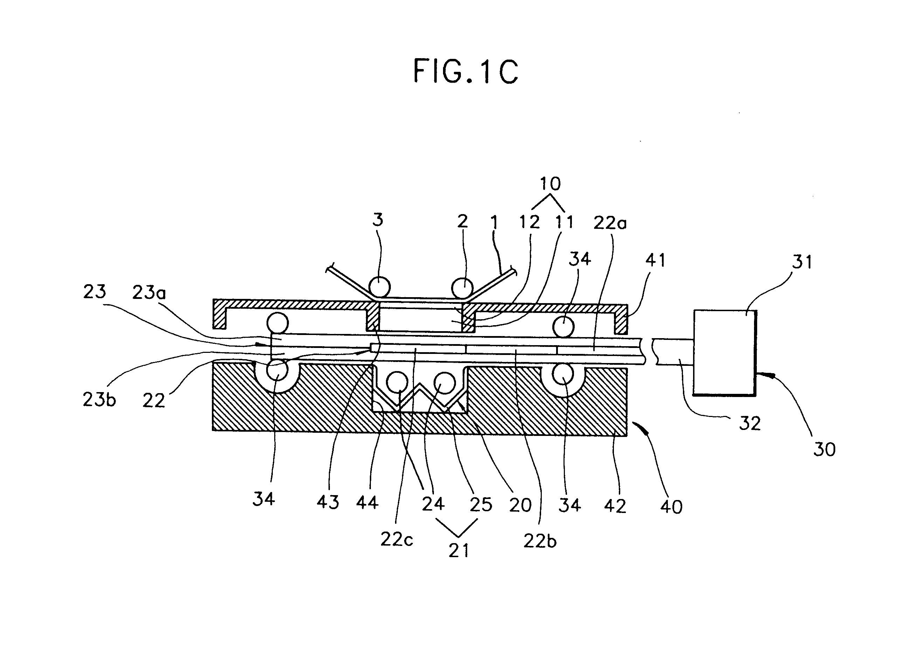

Referring now in detail to the drawings for the purpose of illustrating preferred embodiments of the present invention, the exposure system for a color video printer as shown in Figs. 1A to 1C, comprises an exposure control unit 70 for controlling the exposing operation in a predetermined order in response to color signals corresponding to red, green and blue image signals, an exposing unit 10 for image-forming red, green and blue image signals into optical images by receiving signal voltages corresponding to the red, green and blue image signals upon the control of the exposure control unit 70 and exposing a photosensitive medium 1, and a light emitting unit 20 for irradiating red, green and blue lights to the exposing unit 10 in an order of the signal voltages which are applied to the exposing unit 10.

The exposing unit 10 includes an LCD panel 11 having an effective display area of the same size as an image to be printed for image-forming a monochrome image corresponding to red, green and blue image signals which are supplied in order upon the control of the exposure control unit 70, and a spacer member 12 attached on the front surface of the LCD panel 11 for maintaining a uniform gap between the LCD panel 11 and the photosensitive medium 1 so as to transmit a light to the photosensitive medium 1 at a uniform density, thereby allowing the photosensitive medium 1 to be uniformly exposed.

As for the spacer member 12, a transparent glass plate, a transparent vinyl film or a transparent plastic film having the thickness of tens of micrometers(μm) may be used.

The light emitting unit 20 includes a back light section 21 disposed at the rear side of the monochrome LCD panel 11 so as to irradiate a light to the LCD panel 11, a color filtering member 22 disposed between the LCD panel 11 and the back light section 21 for allowing the light from the back light section 21 to be selectively irradiated to the LCD panel 11 in a red, a green or a blue light, and a driving member 30 for reciprocatingly moving the color filtering member 22 in the conveying direction of the photosensitive medium 1 so that the color filtering member 22 correspond to the order of red, green and blue color signals applied to the LCD panel 11.

The color filtering member 22 includes a color filter supporter 22 for reciprocatingly moving in the conveying direction of the photosensitive medium upon the control of the driving section 30 so that it may correspond to red, green and blue color signals applied to the LCD panel 11, and red, green and blue color filters 22a, 22b and 22c which are contained in the color filter supporter 23.

The color filter supporter 23 includes upper and lower transparent glass plates 23a and 23b.

The red, green and blue color filters 22a, 22b and 22c have a larger size than a screen in some degree.

As for the color filters, a colored thin film is generally used which is made from a material having the good light distributing characteristics such as a celluloid, a glass or a plastic plate or film.

The back light section 21 includes a light source 23 for irradiating a light to the LCD panel 11, and a reflecting member 25 disposed at the rear side of the light source 24 for reflecting the light from the light source 24 toward the LCD panel 11.

As for the light source 24, a fluorescent lamp may be used which is disposed in the right-angled direction to the conveying direction of the photosensitive medium 1.

The light source 24 and the reflecting member 24 are coupled and two pairs thereof are disposed.

The driving unit 30 for driving the color filtering unit 22 is constituted such that one end of the color filter supporter 23 is connected to the drive shaft 32 of the linear motor 31 by means of a belt 33. The driving unit 30 includes a plurality of guide rolls 34 for suppoting upwardly and downwardly and guiding horizontally the color filter supporter 23.

All of the parts mentioned above are assembled in a casing 40 which includes upper and lower casing members 41 and 42. The upper casing member 41 is provided with a supporting member 43 on which the exposing unit 10 is mounted and the lower casing member 42 is provided with a supporting member 44 on which the light source 24 of the back light section 21 and the reflecting member 25 are mounted. And, the color filtering member 22 is movably mounted between the upper and lower casing members 41 and 42 and the linear motor 31 is mounted outside the casing 40.

The exposure control unit 70, as shown in Fig. 5, includes red, green and blue frame memories 50, 51 and 52 for storing data of red, green and blue colors of one picture image, and a liquid crystal controller 60 for converting data from the frame memories 50, 51 and 52 into signal voltages proportional to the data, synchronizing the signal voltages with a scanning signal and outputting the synchronized signals together with the scanning signal to the exposing unit 10 and then controlling the operation of the exposing unit 10.

The exposure system for a color video printer of the present invention operates as follows :

Upon starting the printing operation, the photosensitive medium 1 is positioned on and in contact with the surface of the spacer member 22 by the guidance of the guide rolls 2 and 3.

At this moment, red, green and blue image signal data are stored, respectively, in the R, G, B-frame memories 50, 51 and 52 upon the control of a system controller(not shown), and transmitted to the liquid crystal controller 60 by the color of red, green and blue. The image signal data are converted into signal voltages in proportion to respective pixel data and synchronized with a scanning signal at lines or pixels and then supplied to the LCD panel 11 together with the scanning signal. Thus, the liquid crystal display device is driven by respective pixels in response to the scanning signals and the signal voltages so that the transmittivity is determined by respective pixels.

At this moment, the driving of the driving unit 30 is controlled by the system controller so that the red, green and blue color filters are moved. That is, a color filter corresponding to a color that the LCD panel 11 is driven is moved to a filtering position. At the same time, when the light source 24 is turned on, the light from the light source 24 is converted into a color corresponding to the color filter and then irradiated to the LCD panel 11 of the expososing unit 10. As a result, the light of the same color as the color filter is irradiated to the photosensitive medium 1 through the exposing unit 10. That is, since the LCD panel 11 of the exposing unit 10 is driven so as to have a transmittivity proportional to image signal data upon the control of the exposure control unit 70, a light presenting a color of the light emitting unit 20 is transmitted at the transmittivity of the LCD panel 11 of the exposing unit 10 and then irradiated to the photosensitive medium 1.

Accordingly, the photosensitive medium 1 is exposed by the optical images. By repeating this procedure, that is, red, green and blue colors are exposed in multiple on the same position of the photosensitive medium, the full color picture can be presented.

The exposing procedures by red, green and blue colors will now be described in detail.

In a state that the photosensitive medium 1 is placed on and in contact with the spacer member 22 by the guide rolls 2 and 3, as shown in Fig. 1A the red color filter 22a is positioned so as to be in line with the LCD panel 11, the exposing unit 10 is driven by a red image signal upon the control of the exposure control unit 70, and a red color light from the light source 24 is irradiated to the photosensitive medium 1.

Thereafter, the motor 31 is driven to move the color filtering member 22, as shown in Fig. 18, and a green color light is irradiated to the photosensitive medium 1. That is, the green color filter 22b is positioned in line with the LCD panel 11 so that a green color is exposed.

After exposing the red and green colors, the blue filter 22c is moved toward the LCD panel 11 so that a blue color is exposed to the photosensitive medium 1.

When the exposing operations for red, green and blue colors are finished, the linear motor 31 is driven in reverse direction so that the color filtering member 22 is retreated to its initial position, as shown in Fig. 1A for the preparation of the next printing operation.

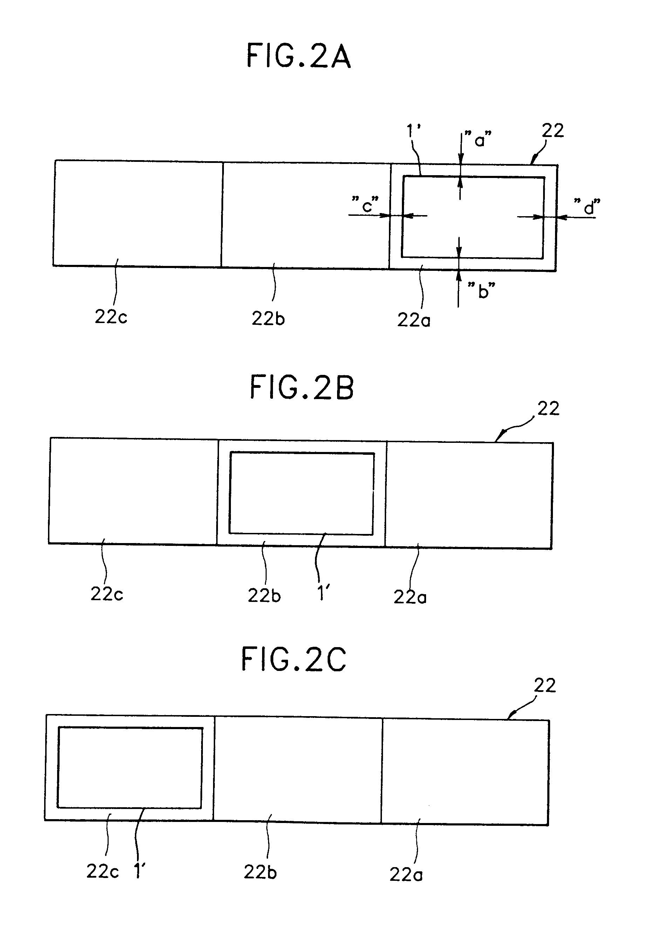

In the above procedure, it is preferable that the red, green and blue color filters 22 has upper, lower, left and right side margins a, b, c and d, as shown in Figs. 2A, 2B and 2C so that they are larger than the screen of the photosensitive medium in several milimeters, thereby causing the picture quality not to be influenced even in case that the red, green and blue color filters 22a, 22b and 22c are deviated from the monochrome LCD panel 11 in some degree but within the margins in the exposing procedure.

As described above in detail, the present invention provides the effect that it is possible to reduce the manufacturing cost by obtaining a full color by moving the color filter and by use of a signle monochrome LCD panel. Also, a precise position control of the photosensitive medium conveying device is not required since the red, green and blue colors are exposed in a state that the photosensitive medium is fixed in one position. Also, it is possible to compensate for a slight position error which may occur in driving the red, green and blue color filters by providing a predetermined margin with the color filters. Moreover, the driving circuit becomes simple in structure since the red, green and blue color exposing operations are carried out by a single LCD controller.

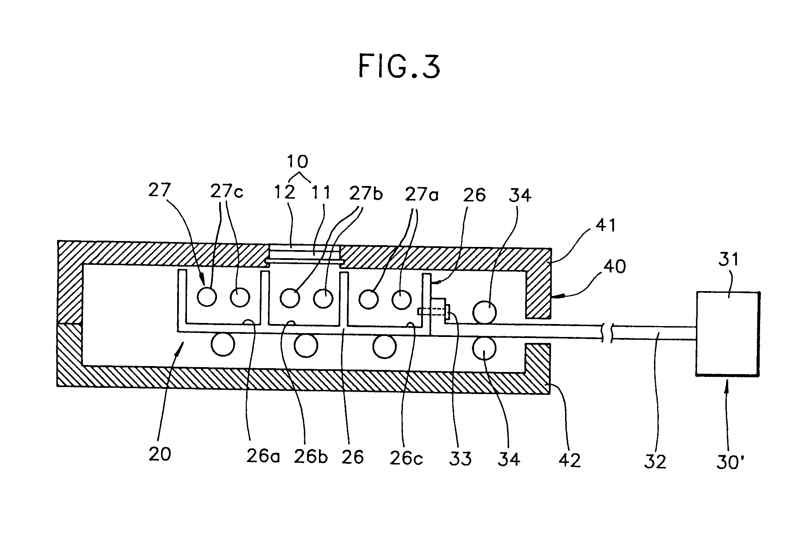

On the other hand, in accordance with another embodiment of the present invention, as shown in Fig. 3, the light emitting unit 20 includes a lamp supporter 26 which is disposed at the rear side of the monochrome LCD panel 11 so as to be reciprocatingly movable in the conveying direction of the photosensitive medium 1, at least one light sources for red, green and blue colors 27; 27a, 27b and 27c which are contained in lamp cavities 26a, 26b and 26c of the lamp supporter 26 and selectively flickered, and a driving member 30' for driving the lamp supporter 26.

The driving member 30' includes a linear motor 31 having a shaft 32 connected to the lamp supporter 26 by means of a bolt 33. Other elements are the same as those in the first embodiment of the present invention.

As for the red, green and blue light sources 27; 27a, 27b and 27c, a fluorescent lamp or a metal halide lamp coated with red, green and blue fluorescent material may be used.

Meanwhile, within the lamp cavities 26a, 26b and 26c of the lamp supporter 26, a reflective material is coated so as to reflect the light from the lamp and within the lamp cavities 26a, 26b and 26c, two light sources 27 for generating red, green and blue lights are disposed, respectively.

In this embodiment, the back light section 21 which is a white light source and the color filtering unit 22 are integrally constituted.

In operations, similarly to the first embodiment, the linear motor 31 is driven to locate the red, green and blue light sources 27a, 27b and 27c at the rear side of the monochrome LCD panel 11 in turn and the exposing unit 10 is driven in the order of the red, green and blue colors and then the light sources 27a, 27b and 27c are turned on so as to expose the red, green and blue colors, in turn.

Moreover, in accordance with still another embodiment, the light emitting unit 20 is disposed below the monochrome LCD panel 11 so as to be selectively turned on and includes red, green and blue light sources 28; 28a, 28b and 28c which are lamps coated with red, green and blue fluorescent material. Other elements are the same as in the first embodiment of the present invention.

In this embodiment, the light emitting unit 20 is fixed in position and the red, green and blue light sources 28a, 28b and 28c are selectively driven to execute the exposing operation. This embodiment has the effect that the structure becomes more simple compared to the first and second embodiments.

The invention being thus described, it will be obvious that the same may be varied in many ways. Such variations are not to be regarded as a departure from the spirit and scope of the invention, and all such modifications as would be obvious to one slcilled in the art are intended to be included in the scope of the following claims.

## Claims

1. An optical exposure system for a color video printer, comprising :

   means for exposure-controlling in an order predetermined in response to color signals corresponding to red, green and blue image signals;

   means for exposing a photosensitive medium by image-forming a monochrome image in response to color signals corresponding to the red, green and blue image signals which are supplied consecutively from said exposure controlling means; and

   light emitting means for irradiating red, green and blue lights consecutively to said exposing means.

2. The system of claim 1, wherein said exposing means comprises:

   a liquid crystal display panel for image-forming a monochrome image corresponding to red, green and blue image singals which are supplied in order upon the control of the exposure controlling means; and

   a spacer member attached on a surface of said liquid crystal display panel for causing the photosensitive medium to be uniformly exposed.

3. The system of claim 2, wherein said spacer member is a transparent thin plate.

4. The system of claim 1, said light emitting means comprises:

   a back light section disposed below the monochrome liquid crystal display panel for irradiating a light to the liquid crystal display panel;

   color filtering means disposed between the liquid crystal display panel and the back light section for causing the light from the back light section to be selectively irradiated on the liquid crystal display panel in red, green or blue color; and

   means for selectively driving said color filtering means so as to correspond to the red, green and blue lights which are applied to the liquid crystal display panel.

5. The system of claim 4, wherein said back light section comprises:

   a light source for irradiating a light to the liquid crystal display panel; and

   reflecting means for condensing and reflecting a light from the light source toward the liquid crystal display panel.

6. The system of claim 4, wherein said color filtering means comprises:

   a color filter supporter for reciprocally moving in response to the red, green and blue color signals which are applied to the liquid crystal display panel upon the control of the driving means; and

   red, green and blue color filters contained in said color filter supporter.

7. The system of claim 6, wherein said red, green and blue color filters are thin glass plates which are capable of irradiating a loght from the back light section to the liquid crystal display panel after converting the light into red, green and blue lights.

8. The system of claim 7, wherein said red, green and blue color filters are larger in size than a screen to be exposed by the red, green and blue color filters.

9. The system of claim 4, wherein said driving means comprises:

   a motor having a shaft connected to the color filter supporter for reciprocatingly moving the color filter supporter; and

   a plurality of guide rolls for guiding horizontally the color filter supporter.

10. The system of claim 1, wherein said light emitting means comprises:

   a lamp supporter mounted in reciprocatingly movable at the rear of the exposing means and having cavities for containing red, green and blue lamps therein;

   red, green and blue light sources contained in said lamp cavities, respectively, and selectively flickered; and

   driving means for reciprocatingly moving the lamp supporter.

11. The system of claim 10, wherein said lamp cavities are coated with a reflective material on their inner surfaces.

12. The system of claim 10, wherein said red, green and blud light sources are lamps coated with red, green and blue fluorescent materials, respectively.

13. The system of claim 10, wherein said red, green and blue light sources include at least two color light sources.

14. The system of claim 10, wherein said driving means comprises:

a linear motor having a shaft connected to the lamp supporter for reciprocatingly moving the lamp supporter; and

a plurality of guide rolls for guiding horizontally the lamp supporter.

15. The system of claim 1, wherein said light emitting means includes red, green and blue light sources disposed at the rear side of the exposing means and selectively flickered.

16. The system of claim 15, wherein said red, green and blue light sources are lamps coated with red, green and blue fluorescent materials, respectively.

FIG.1A

FIG.1B

FIG.1C

# FIG.2A

22c  22b  22a

# FIG.2B

22c  22b  1'  22a

# FIG.2C

22c  1'  22b  22a

FIG.3

# FIG.4

# FIG.5